# EUROPÄISCHE PATENTSCHRIFT

(11) **EP 3 221 806 B1**
(45) Veröffentlichungstag und Bekanntmachung des Hinweises auf die Patenterteilung: **14.08.2019**
(21) Anmeldenummer: 16706182.9
(22) Anmeldetag: 24.02.2016
(51) Int. Cl.: G06F 17/50

(54) **MODELLIERUNG DER ALTERUNG EINES BAUTEILS AUS EINEM NICHTLINEAR ELASTISCHEN WERKSTOFF UNTER BELASTUNG**
MODELING OF THE AGING OF A COMPONENT COMPOSED OF A NONLINEARLY ELASTIC MATERIAL UNDER LOAD
MODÉLISATION DU VIEILLISSEMENT D'UN ÉLÉMENT EN UN MATÉRIAU ÉLASTIQUE NON LINÉAIRE SOUS CHARGE

(30) Priorität: 05.03.2015 AT 501722015
(43) Veröffentlichungstag der Anmeldung: 27.09.2017
(73) Patentinhaber: Siemens Mobility GmbH, 1210 Wien (AT)
(72) Erfinder: RINGSWIRTH, Jochen, 8680 Ganz/Mürzzuschlag (AT)
(74) Vertreter: Deffner, Rolf
(86) Internationale Anmeldenummer: PCT/EP2016/053856
(87) Internationale Veröffentlichungsnummer: WO 2016/139099

(56) Entgegenhaltungen:
- CLAUDE CHAZAL ET AL: "Modelling of ageing viscoelastic materials in three dimensional finite element approach", MECCANICA, KLUWER ACADEMIC PUBLISHERS, DO, Bd. 45, Nr. 3, 15. September 2009 (2009-09-15), Seiten 439-441, XP019826233, ISSN: 1572-9648
- MICHAEL JOHLITZ ET AL: "Chemo-thermomechanical ageing of elastomers based on multiphase continuum mechanics", CONTINUUM MECHANICS AND THERMODYNAMICS, Bd. 25, Nr. 5, 20. Juni 2012 (2012-06-20), Seiten 605-624, XP055268859, DE ISSN: 0935-1175, DOI: 10.1007/s00161-012-0255-8

## Beschreibung

### Technisches Gebiet

Die Erfindung betrifft ein Verfahren zur rechnerischen Modellierung der Alterung eines Bauteils aus einem nichtlinear elastischen Werkstoff unter einer vorgegebenen Belastung. Darüber hinaus umfasst die vorliegende Erfindung ein zugehöriges Computerprogrammprodukt.

Unter nichtlineare elastische Werkstoffe fallen Bauteile bestehend aus natürlichen oder synthetischen Elastomeren sowie Bauteile enthaltend natürliche oder synthetische Elastomere, insbesondere gefüllte, also füllstoffverstärkte, Elastomere.

Zu modellierende Bauteile können Fahrzeugbauteile, insbesondere Federn und Koppelelemente, von Schienenfahrzeugen oder Bauteile für andere technische Anwendungen sein, die aus zumindest einer Schicht ElastomerWerkstoff bestehen, z.B. die Primärfeder eines Schienenfahrzeugs.

### Neuer Stand der Technik

Elastomer-Werkstoffe unterliegen immer einer Alterung. Dieser physikalische Effekt kann nicht verhindert werden, er verändert aber die Materialeigenschaften des Bauteils maßgeblich. Diese Veränderungen können bisher nicht nachgestellt werden, bestimmen aber wesentlich die Einsatzdauer des Bauteils, zum Beispiel in einem Fahrzeug.

Da die altersbedingte Bauteilveränderung nicht berechnet werden kann, wird auf Erfahrungswerte zurückgegriffen. Diese treffen auf einige Bauteile gut zu, bei anderen Bauteilen sind diese aber weit von der Realität entfernt. Dadurch werden oft Wartungsintervalle zu früh angesetzt, was einen wirtschaftlichen Schaden nach sich zieht.

Experimentell kann die Alterung durch erhöhte Temperaturen nachgebildet werden. Diese Vorgangsweise berücksichtigt aber nicht den Einfluss des Betriebs auf den Bauteil, also etwa Verformungen durch Belastungen, und kann daher für eine Beurteilung der Bauteilveränderung über die Zeit nicht herangezogen werden.

Aus dem Stand der Technik zeigen beispielsweise Claude Chazal und Rostand Moutou Pitti in "Modelling of ageing viscoelastic materials in three dimensional finite element approach", Meccanica (2010) 45: 439-441, ISSN: 1572-9648, DOI: 10.1007/s11012-009-9244-9 einen effizienten Modellierungsansatz auf Grundlage eines generalisierten Kelvin-Voigt-Modells, wobei ein Antwortverhalten einer viskoelastischen Struktur mittels Anwendung einer Finite Elemente Methode beschrieben ist.

Weiterhin beschreiben Michael Johlitz und Alexander Lion in "Chemo-thermomechanical ageing of elastomers based on multiphase continuum mechanics", Continuum Mech. Thermodyn. (2013) 25:605-624, ISSN: 0935-1175, DOI: 10.1007/s00161-012-0255-8 Alterungsprozesse in Elastomeren. Es ist ein Materialmodell mit thermodynamischer Kopplung gezeigt, welches neben viskoelastischen Vorgängen auch chemische Zersetzungs- und Erholungsprozesse beschreibt.

### Darstellung der Erfindung

Es ist daher eine Aufgabe der vorliegenden Erfindung, ein Verfahren zu schaffen, durch welches die Modellierung der Alterung eines Bauteils unter Berücksichtigung einer gegebenen Belastung über die Zeit erfolgen kann.

Diese Aufgabe wird durch ein Verfahren mit den Merkmalen des Patentanspruchs 1 gelöst. Das computerimplementierte Verfahren weist die Schritte auf,
- dass der unbelastete Bauteil im Modell durch mehrere Knotenpunkte ersetzt wird, die durch mehrere Stäbe untereinander verbunden sind, wobei jedem Stab ein mathematisches Materialmodell auferlegt wird und die Stäbe ein erstes Netz bilden,
- dass der Bauteil im Modell entsprechend der realen Belastung verformt wird und in diesem verformten Zustand zusätzliche Stäbe zwischen die Knotenpunkte eingefügt werden, wobei die zusätzlichen Stäbe ein zweites Netz bilden, während Stäbe des ersten Netzes gelöscht werden, und
- wobei das Ausmaß der Vernetzung des zweiten Netzes von der Dauer des verformten Zustands abhängig gemacht wird.

Die Erfindung besteht somit darin, einen alternden Elastomer-Bauteil in einem Ersatzmodell nachzustellen und seine Eigenschaften mit diesem Ersatzmodell zu berechnen. Dabei bedeutet der physikalische Effekt der Alterung nichts anderes als eine Bindungsauflösung einerseits und eine Neubildung von Bindungen im Material andererseits. Die Alterungsvorgänge werden dabei so nachgestellt, dass man zusätzliche Vernetzungen in Abhängigkeit der Aufenthaltswahrscheinlichkeit bezogen auf die Bauteilverschiebung anbringt. Dies bedeutet, dass die altersbedingte Bauteilveränderung von der Belastung des Bauteils abhängig ist. Dies kann auch in der Realität beobachtet werden. Erfindungsgemäß wird dies so realisiert, dass man einen Bauteil durch ein Modell aus elastischen Stäben ersetzt und zusätzlich Vernetzungen in Abhängigkeit eines Beanspruchungssignals (Verlauf der Beanspruchung über die Zeit) bildet. Das bedeutet, dass Vernetzungs-Stäbe, eben die zusätzlichen Stäbe des zweiten Netzes, neu gebildet werden, und zufällige, bestehende Stäbe aus dem ersten Netz gelöscht werden. Die neu gebildeten Stäbe werden in dem Zustand der jeweiligen Last ins Modell gegeben, das bedeutet, es ändert sich der Dehnungszustand des gesamten Ersatzmodells, also von erstem plus zweitem Netz, und damit dessen Charakter, z.B. dessen Steifigkeit, die somit berechenbar wird.

Es ist auch möglich, dass weitere verformte Zustände herangezogen werden und wieder, analog dem zweiten Netz weitere Stäbe eines weiteren Netzes eingefügt und bestehende Stäbe, aus dem ersten und/oder zweiten Netz, dafür entfernt werden.

Jedem Stab des ersten Netzes und jedem zusätzlichen Stab des zweiten (oder weiteren) Netzes kann als Materialmodell ein linear-elastisches oder nichtlinear-elastisches Verhalten auferlegt werden. Die mathematischen Materialmodelle des ersten Netzes (Hauptnetzes) sowie des zweiten oder gegebenenfalls des/der weiteren Netze/s (Zusatzvernetzungen) können analog oder unterschiedlich sein. So könnte etwa allen Stäben des ersten Netzes das gleiche Materialmodell, z.B. eine bestimmte Steifigkeit, zugewiesen werden, während allen zusätzlichen Stäben des zweiten Netzes das gleiche, jedoch vom ersten Netz unterschiedliche Materialmodell zugewiesen wird. Grundsätzlich kann aber auch jeder Stab bzw. jeder zusätzliche Stab eine unterschiedliche Steifigkeit aufweisen.

Sowohl die einzelnen Stäbe des ersten Netzes als auch die zusätzlichen Stäbe des zweiten Netzes (sowie gegebenenfalls die weiteren Stäbe von weiteren Netzen) werden in der Regel entsprechend einer Normalverteilung zufällig zwischen den Knotenpunkten verteilt. Grundsätzlich sind natürlich auch andere Verteilungen möglich.

Das Modell kann wesentlich vereinfacht werden, wenn der dreidimensionale Bauteil im Modell vor der Bildung des ersten Netzes durch ein zweidimensionales Ersatzmodell ersetzt wird. Diese Transformation von einem 3D- auf einen 2D-Bauteil bzw. Bewegungszustand ist abhängig von der Geometrie des zu berechnenden Bauteiles. Dabei teilt man in der Regel die auf den Bauteil wirkenden Bewegungen in eine Zug-Druck- und in eine Schub-Belastung auf.

Durch die Einfachheit des erfindungsgemäßen Verfahrens ist es möglich, dass als Eingangsgrößen für das Modell des Bauteils lediglich die wirkende federnde Schichtdicke des Bauteiles in mm sowie, bei Verwendung von Kraftsignalen als Belastungsgröße, die Steifigkeiten bzw. Steifigkeitsverläufe des Bauteils (in allen drei Raumrichtungen) zu definieren sind.

Als Belastungs-Eingangsgröße für eine über die Zeit veränderliche Belastung kann ein zeitabhängiges Wegsignal bzw. ein zeitabhängiges Kraftsignal verwendet werden. Dabei kann aufgrund der Einfachheit des Modells nicht nur ein periodisches Signal, wie eine Sinusschwingung, verwendet werden, sondern es können grundsätzlich auch komplexere Signale, wie sie etwa bei Messfahrten eines realen Schienenfahrzeugs ermittelt worden sind, verwendet werden.

Dabei kann nicht nur eine einaxiale Belastung des Bauteils berücksichtigt werden, sondern in der Regel mehraxiale Belastungen. Diese mehraxiale Belastung (in allen drei Raumrichtungen) wird zu einem Belastungssignal wirkend auf das 2D-Ersatzmodel zusammengefügt.

Das erfindungsgemäße Verfahren kann vorteilhaft für Bauteile eines Schienenfahrzeugs eingesetzt werden, nämlich beispielsweise für Konusfedern in der Primärstufe sowie Sekundärstufe, Radsatzführungsbuchsen, Buchsen der Längsmitnahmen, Schichtfedern etc., jedoch auf für entsprechende Bauteile anderer Fahrzeuge oder Einrichtungen.

Schließlich umfasst die Erfindung ein Computerprogrammprodukt, welches ein Programm umfasst und direkt in einen Speicher eines Rechners ladbar ist, mit Programm-Mitteln, um alle Schritte des erfindungsgemäßen Verfahrens auszuführen, wenn das Programm vom Rechner ausgeführt wird.

Elastomer-Bauteile, insbesondere Federelemente, sind maßgeblich für die Fahrsicherheit in Schienenfahrzeugen verantwortlich. Die spezifischen Eigenschaften, wie Steifigkeit, Höhen (Dicken) unter Last usw., gewährleisten die Entgleisungssicherheit. Durch den Alterungseffekt werden die Eigenschaften der Elastomer-Bauteile maßgeblich verändert und greifen somit in die Entgleisungssicherheit ein. Durch Kenntnis dieser Veränderungen bzw. durch deren Voraussagbarkeit während des Betriebs kann man einerseits für bestehende Bauteile im Voraus gezielter festlegen, wann eine Wartung oder ein Austausch zu erfolgen hat. Andererseits kann man beim Design von Elastomer-Bauteilen diese durch Wahl des Materials und/oder der Abmessungen so auslegen, dass ein vorgegebenes Wartungs- oder Austauschintervall später im Betrieb eingehalten werden kann.

### Kurzbeschreibung der Figuren

Zur weiteren Erläuterung der Erfindung wird im nachfolgenden Teil der Beschreibung auf die Figuren Bezug genommen, aus denen weitere vorteilhafte Ausgestaltungen, Einzelheiten und Weiterbildungen der Erfindung zu entnehmen sind. Dabei zeigen:
- Fig. 1: ein zweidimensionales Modell eines Bauteils mit Knotenpunkten,
- Fig. 2: das zweidimensionale Modell aus Fig. 1 mit vernetzten Stäben (erstes Netz),
- Fig. 3: das zweidimensionale Modell aus Fig. 2 im verformten Zustand,
- Fig. 4: das zweidimensionale Modell aus Fig. 3 mit zusätzlichen Stäben (zweites Netz),
- Fig. 5: den Dehnungsverlauf nur des ersten Netzes aus Fig. 3,
- Fig. 6: den Dehnungsverlauf nur des zweiten Netzes aus Fig. 4,
- Fig. 7: den Dehnungsverlauf aus der Kombination des ersten und des zweiten Netzes,
- Fig. 8: ein Kraft-Zeitsignal als Eingangsgröße für das erfindungsgemäße Verfahren,
- Fig. 9: ein Vergleich von Modell und realem Bauteil vor und nach einer Belastung hinsichtlich der Kraft-Weg-Kennlinie, der Steifigkeits-Kraft-Kennlinie und der relativen Kraftänderung.

### Ausführung der Erfindung

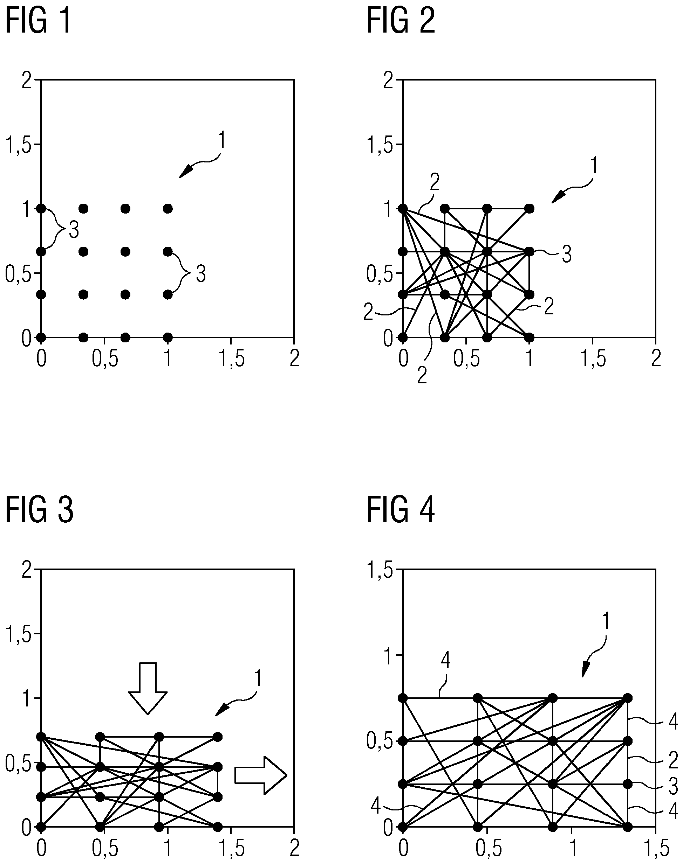

Zuerst werden die Daten des zu modellierenden Elastomer-Bauteils 1 festgelegt, das sind die Elastomer-Schichtdicke sowie die Steifigkeiten des Bauteils 1 in allen drei Raumrichtungen, wobei die Steifigkeiten in Form von Skalaren und/oder Polynomen vorliegen. Anschließend wird der Bauteil 1 rechnerisch auf ein zweidimensionales Ersatzmodell reduziert, also auf einen zweidimensionalen Dehnungszustand, zum Beispiel auf ein Flächenmodell mit der Kantenlänge 1. Dies ist Fig. 1 zu entnehmen, wo das zweidimensionale Modell des Bauteils 1 als Quadrat mit der Seitenlänge 1 dargestellt ist und durch mehrere rasterförmig angeordnete Knotenpunkte 3 repräsentiert wird, hier sechzehn Knotenpunkte. Ein Bauteil wird in der Regel jedoch im zweidimensionalen Modell durch bis zu 100 oder mehr Knotenpunkte repräsentiert werden, etwa durch bis zu 200.

Das zweidimensionale Ersatzmodell des Bauteils 1 besteht somit aus Knoten mit fixen Abständen, nämlich 1/(Anzahl der Knoten). Anschließend wird für den unbelasteten Bauteil 1 eine normalverteilte Hauptvernetzung (erstes Netz) mit vielen Zugstäben 2 erstellt, die als normalverteilte Zufallsbindungen die Knotenpunkte 3 des zweidimensionalen Ersatzmodells miteinander verbinden. In Fig. 2 sind diese Zugstäbe 2 nun eingezeichnet, sie können bis zu einem benachbarten Knotenpunkt 3 reichen oder über diese hinaus mit weiter entfernten Knotenpunkten 3 verbunden sein. Die einzelnen Knoten werden also durch zufällig verknüpfte Zugstäbe 2 verbunden, jeder Knoten (bzw. Knotenpunkt 3) bildet eine Verbindung zu einem zufällig ausgewählten anderen Knoten (Knotenpunkt 3) aus. Es ist keine Bindung eines Knotens (bzw. Knotenpunkts 3) auf sich selbst möglich. Das Materialmodell der Zugstäbe 2 und die Anzahl der Zugstäbe 2 sind so zu wählen, dass sich aus dem ersten Netz die vorgegebene Steifigkeit des Bauteils 1 im unbelasteten Zustand ergibt.

Alle Zwangsbedingungen, Randbedingungen, Lasten (insbesondere stationäre Lasten, wie das auf dem Bauteil lastende Gewicht eines Fahrzeugteils, und veränderliche Lasten, wie die Zuladung oder die Belastung bei Kurvenfahrt) und weitere Betriebssignale (Spannungen, insbesondere dynamische Belastungen wie das Schaukeln des Fahrzeugs) des dreidimensionalen Bauteils werden auf das Ersatzmodell reduziert.

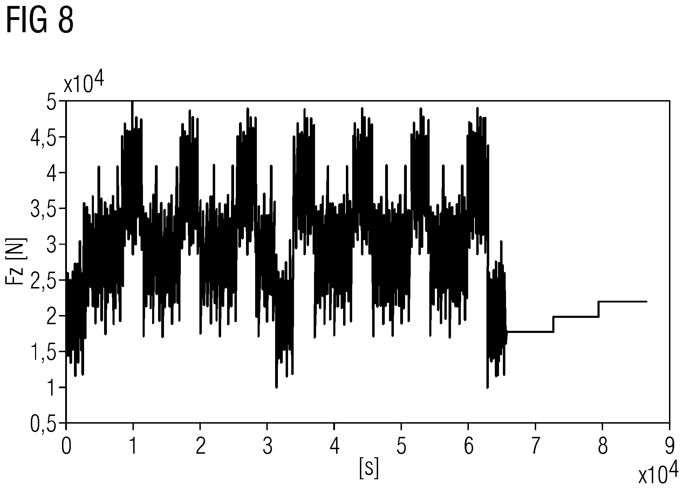

Dabei wird die auf den Bauteil 1 einwirkende Spannung bzw. Kraft festgelegt, in der Regel als Zeitsignal, z.B. als Kraft-Zeit-Signal, siehe Fig. 8. Falls die auf den Bauteil 1 einwirkende Kraft bzw. Spannung während des Simulationszeitraums periodisch verläuft, könnte diese auch als Mittelspannung (Mittellast) und überlagerte Schwingung vorgegeben werden, wobei dann nur die Amplitude und die Phase der überlagerten Schwingung angegeben werden muss. Die Mittelspannung (oder Mittellast) ist jene Spannung, welcher der Bauteil im eingebauten Zustand in Ruheposition unterliegt (z.B. die Vorspannung einer Feder, die aus dem Gewicht eines darauf gelagerten Fahrzeugteils resultiert), und der dann im Betriebszustand (beispielsweise bei der Fahrt eines Schienenfahrzeugs) weitere Spannungen, insbesondere zyklische Spannungen (z.B. durch den Betrieb hervorgerufene Bewegungen des Fahrzeugs), überlagert werden. Die weiteren Spannungen können sich nur als Druckspannungen, nur als Zugspannungen oder als Druck- und Zugspannungen auswirken. Je nach Lage der Mittelspannung, also ob diese im Zug- oder im Druckbereich liegt, werden sich die weiteren Spannungen unterschiedlich auswirken.

Es wird ein Bewegungsvektor für das 2D-Ersatzmodel des Bauteils 1 gebildet und das erste Netz bestehend aus den Zugstäben 2 entsprechend verformt, wobei die Fläche des Bauteils 1 dabei konstant bleibt, siehe Fig. 3. Im dargestellten Fall wird der Bauteil 1 einaxial von oben belastet, sodass sich seine Höhe verringert und seine Breite entsprechend erhöht, was durch die dicken Pfeile dargestellt wird.

In diesem Punkt der Verformung wird nun ein zweites Netz gebildet bestehend aus zusätzlichen Zugstäben 4, siehe Fig. 4. Diese Zugstäbe 4 bilden eine normalverteilte Zusatzvernetzung, wobei die Zugstäbe 4 als normalverteilte Zufallsbindungen die Knotenpunkte 3 des zweidimensionalen Ersatzmodells miteinander verbinden. Das zweite Netz bestehend aus den Zugstäben 4 befindet sich somit im verformten Zustand gemäß Fig. 4 im ungedehnten Zustand, während sich das erste Netz bestehend aus den Zugstäben 2 im gedehnten Zustand befindet. Im Ausgangszustand gemäß Fig. 2 befindet sich das erste Netz bestehend aus den Zugstäben 2 im ungedehnten Zustand, während sich das nun eingefügte zweite Netz bestehend aus den Zugstäben 4 in einem gedehnten Zustand befinden würde.

Die zusätzlichen Zugstäbe 4 werden in Abhängigkeit von der realen Belastung des Bauteils 1 eingefügt, nämlich in Abhängigkeit von der Belastung über die Zeit. Die Fülle bzw. Ausprägung der Zusatzvernetzung, z.B. die Anzahl der zusätzlichen Stäbe 4, hängt dabei von der Zeitdauer des Aufenthalts des realen Bauteils unter dieser Belastung ab. Folglich müssen als Berechnungsbasis Zeitsignale bzw. Zeitinformationen zur Belastung vorliegen. Je länger der reale Bauteil der Belastung und damit dem verformten Zustand von Fig. 3 unterliegt, desto mehr zusätzliche Stäbe 4 werden angeordnet.

Gleichzeitig mit dem Einfügen von zusätzlichen Stäben 4 werden Stäbe 2 des ersten Netzes gelöscht, ebenfalls in Abhängigkeit von der Belastung über die Zeit. Beispielsweise kann pro zusätzlichem Stab 4 ein Stab 2 gelöscht werden. In Fig. 4 ist beispielsweise jedenfalls von den vier links oben beginnenden Stäben 2 aus Fig. 3 nur mehr ein Stab 2 übrig.

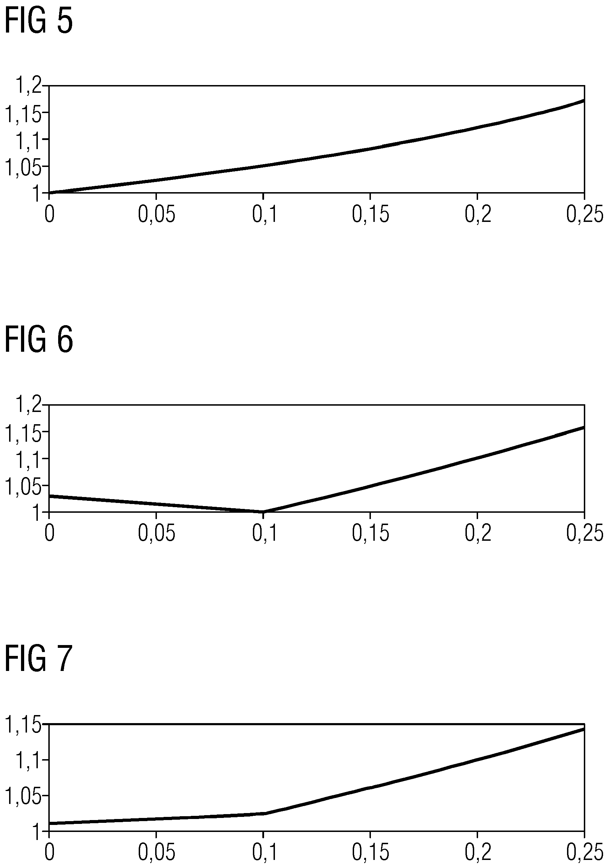

Durch die Überlagerung des ersten Netzes, umfassend die Stäbe 2, mit dem zweiten Netz, umfassend die Stäbe 4, ist nun ein Modell des Bauteils 1 verfügbar, der entsprechend der Belastung gealtert ist. Für diesen gealterten Bauteil kann nun etwa rechnerisch der Zusammenhang zwischen Auslenkung in Höhenrichtung und Dehnung bestimmt werden. Dies ist in den Fig. 5-7 dargestellt. Auf der waagrechten Achse ist jeweils die Auslenkung (Einfederung) eines Bauteils aufgetragen, auf der senkrechten Achse die Dehnung.

Dabei zeigt Fig. 5 den Dehnungsverlauf für den Fall, dass nur das erste Netz aus Fig. 3 vorhanden ist, was einen linearen Zusammenhang ergibt und hier den ursprünglichen, nicht gealterten Bauteil repräsentiert.

Fig. 6 zeigt den Dehnungsverlauf für den Fall, dass nur das zweite Netz aus Fig. 4 vorhanden ist, jedoch nicht das erste Netz. Es ist ersichtlich, dass bereits im unbelasteten Zustand eine Dehnung vorliegt, die mit zunehmender Auslenkung (Einfederung) vorerst abnimmt und dann wieder zunimmt. Fig. 7 schließlich zeigt den Dehnungsverlauf, wenn sowohl erstes als auch zweites Netz vorhanden ist, wie dies in Fig. 4 dargestellt ist. Dadurch ergibt sich eine Dehnung von ungleich Null bei fehlender Auslenkung, während die Dehnung dann linear zunimmt, zuerst schwächer und dann stärker.

Als Basis für die Berechnung des Modells wurde ein Zeitsignal (Betriebssignal) für eine Primärfederung einer Metro herangezogen. Dabei ist auf der Hochachse die Kraft, welche in Höhenrichtung auf die Primärfeder einwirkt, und auf der Querachse die Zeit in Sekunden aufgetragen, hier für einen Tag. Dabei war die Metro für etwa 18 Stunden im Fahrbetrieb und die restliche Zeit im Stillstand, und zwar in drei unterschiedlichen Laststufen (Stehen in einer Ebene, Stehen im Bogen, etc.). Dieses Signal wurde auf ein Betriebsjahr aufsummiert und dann für 11 Betriebsjahre berechnet bzw. gemessen. Bei der Berechnung mit dem erfindungsgemäßen Modell wurde die Berechnung für 11 Jahre iterativ bestimmt, also für ein Jahr berechnet und dann dieses gealterte Modell als Basis für ein Modell für ein weiteres Jahr an Belastung herangezogen, und so weiter.

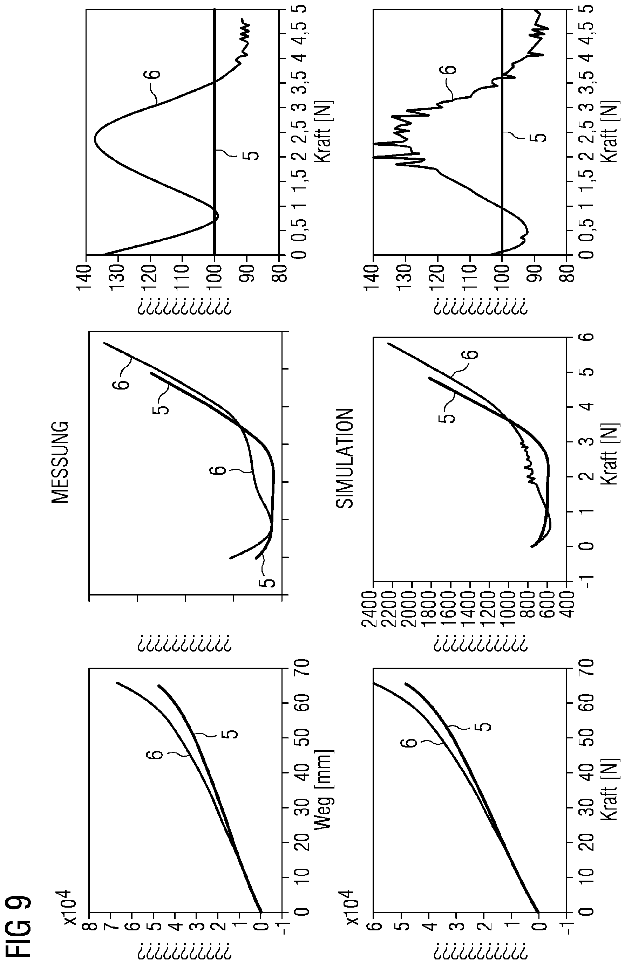

Der Vergleich zwischen erfindungsgemäßem Modell und realem Bauteil ist in Fig. 9 dargestellt. Die drei oberen Abbildungen betreffen die gemessenen Ergebnisse, die drei unteren Abbildungen die Ergebnisse der Simulation mittels des erfindungsgemäßen Verfahrens.

Dabei zeigen die beiden linken Abbildungen die Kraft-Weg-Kennlinie, wo auf der Hochachse die Kraft in N und auf der Querachse der Weg in mm aufgetragen ist. Die Kurve 5 repräsentiert dabei den Neuzustand des Bauteils 1, die Kurve 6 den gealterten Zustand nach 11 Jahren Betriebsdauer.

Die beiden mittleren Abbildungen zeigen jeweils die Steifigkeits-Kraft-Kennlinie, wobei wieder die Kurve 5 den Neuzustand und die Kurve 6 den gealterten Zustand nach 11 Jahren repräsentiert.

Die beiden rechten Kurven zeigen die relative Kraftänderung durch die Alterung. Auf der Querachse ist die Kraft auf den Bauteil in Newton aufgetragen, auf der Hochachse die Kraftänderung in % aufgrund der Alterung in 11 Jahren. Der Neuzustand 5 wird hier durch die waagrechte 100%-Linie repräsentiert, der gealterte Zustand 6 durch die dargestellte Kurve.

Insgesamt ergibt sich, bis auf ein Überschwingen in einigen Bereichen der Simulation, eine gute Übereinstimmung zwischen Modell und Realität.

### Bezugszeichenliste:

- 1: Bauteil
- 2: Stab (Zugstab)
- 3: Knotenpunkt
- 4: zusätzlicher Stab (zusätzlicher Zugstab)
- 5: Neuzustand
- 6: gealterter Zustand

## Patentansprüche

1. Computerimplementiertes Verfahren zur rechnerischen Modellierung der Alterung eines Bauteils aus einem nichtlinear elastischen Werkstoff unter einer vorgegebenen Belastung, mit den Schritten
- dass der unbelastete Bauteil (1) im Modell durch mehrere Knotenpunkte (3) ersetzt wird, die durch mehrere Stäbe (2) untereinander verbunden sind, wobei jedem Stab (2) ein mathematisches Materialmodell auferlegt wird und die Stäbe ein erstes Netz bilden,
- dass der Bauteil (1) im Modell entsprechend der realen Belastung verformt wird und in diesem verformten Zustand zusätzliche Stäbe (4) zwischen die Knotenpunkte (3) eingefügt werden, wobei die zusätzlichen Stäbe (4) ein zweites Netz bilden, während Stäbe (2) des ersten Netzes gelöscht werden, und
- wobei das Ausmaß der Vernetzung des zweiten Netzes von der Dauer des verformten Zustands abhängig gemacht wird.

2. Verfahren nach Anspruch 1, **dadurch gekennzeichnet, dass** jedem Stab (2) des ersten Netzes und jedem zusätzlichen Stab (4) des zweiten Netzes als Materialmodell ein linear-elastisches oder nichtlinear-elastisches Verhalten auferlegt wird.

3. Verfahren nach Anspruch 1 oder 2, **dadurch gekennzeichnet, dass** allen Stäben des ersten Netzes das gleiche erste Materialmodell auferlegt wird und allen zusätzlichen Stäben des zweiten Netzes das gleiche zweite Materialmodell auferlegt wird, wobei sich erstes und zweites Materialmodell voneinander unterscheiden.

4. Verfahren nach einem der Ansprüche 1 bis 3, **dadurch gekennzeichnet, dass** die Stäbe (2) und die zusätzlichen Stäbe (4) entsprechend einer Normalverteilung zufällig in die Knotenpunkte (3) gelegt werden.

5. Verfahren nach einem der Ansprüche 1 bis 4, **dadurch gekennzeichnet, dass** der dreidimensionale Bauteil (1) im Modell vor der Bildung des ersten Netzes durch ein zweidimensionales Ersatzmodell ersetzt wird.

6. Verfahren nach einem der Ansprüche 1 bis 5, **dadurch gekennzeichnet, dass** als Eingangsgrößen für das Modell des Bauteils (1) die Steifigkeiten des Bauteils sowie die Schichtdicke des Bauteils (1) verwendet werden.

7. Verfahren nach einem der Ansprüche 1 bis 6, **dadurch gekennzeichnet, dass** als Eingangsgröße für die Belastung ein Weg-Zeitsignal oder Kraft-Zeitsignal verwendet wird.

8. Verfahren nach einem der Ansprüche 1 bis 7, **dadurch gekennzeichnet, dass** der Bauteil (1) ein Bauteil eines Schienenfahrzeugs ist.

9. Computerprogrammprodukt, welches ein Programm umfasst und direkt in einen Speicher eines Rechners ladbar ist, mit Programm-Mitteln, um alle Schritte des Verfahrens nach einem der Ansprüche 1 bis 8 auszuführen, wenn das Programm vom Rechner ausgeführt wird.

## Claims

1. Computer-implemented method for the calculational modelling of the aging of a component from a non-linear elastic material under a predetermined load, having the steps
- that the unloaded component (1) in the model is replaced by a number of nodal points (3) which are interconnected by means of a number of bars (2), wherein a mathematical material model is imposed on each bar (2) and the bars form a first network,
- that the component (1) in the model is deformed in accordance with the real load and in this deformed state additional bars (4) are inserted between the nodal points (3), wherein the additional bars (4) form a second network, while bars (2) of the first network are deleted, and
- wherein the degree of integration of the second network is made dependent on the duration of the deformed state.

2. Method according to claim 1, **characterised in that** a linear-elastic or non-linear elastic behaviour is imposed on each bar (2) of the first network and each additional bar (4) of the second network as a material model.

3. Method according to claim 1 or 2, **characterised in that** the same first material model is imposed on all bars of the first network and the same second material model is imposed on all additional bars of the second network, wherein first and second material model differ from one another.

4. Method according to one of claims 1 to 3, **characterised in that** the bars (2) and the additional bars (4) are positioned randomly in the nodal points (3) in accordance with a standard distribution.

5. Method according to one of claims 1 to 4, **characterised in that** the three-dimensional component (1) in the model is replaced by a two-dimensional replacement model prior to forming the first network.

6. Method according to one of claims 1 to 5, **characterised in that** the rigidities of the component and the layer thickness of the component (1) are used as input variables for the model of the component (1).

7. Method according to one of claims 1 to 6, **characterised in that** a path time signal or force time signal is used as an input variable for the load.

8. Method according to one of claims 1 to 7, **characterised in that** the component (1) is a component of a rail vehicle.

9. Computer program product which comprises a program and can be loaded directly into a memory of a computer, having program means in order to carry out all steps of the method according to one of claims 1 to 8, when the program is run by the computer.

## Revendications

1. Procédé implémenté par ordinateur de modélisation par calcul du vieillissement d'un élément dans un matériau élastique non linéaire sous une charge prédéfinie, comprenant les étapes suivantes :
- que l'élément non chargé (1) est remplacé dans le modèle par une pluralité de points nodaux (3) qui sont reliés entre eux par plusieurs bâtonnets (2), dans lequel à chaque bâtonnet (2) correspond un modèle de matériau mathématique et les bâtonnets forment un premier réseau,
- que l'élément (1) est déformé dans le modèle conformément à la charge réelle et dans cet état déformé, des bâtonnets supplémentaires (4) sont ajoutés entre les points nodaux (3), dans lequel les bâtonnets supplémentaires (4) forment un deuxième réseau, tandis que les bâtonnets (2) du premier réseau sont effacés, et
- dans lequel la dimension de l'interconnexion du deuxième réseau est rendue dépendante de la durée de l'état déformé.

2. Procédé selon la revendication 1, **caractérisé en ce qu'**à chaque bâtonnet (2) du premier réseau et à chaque bâtonnet supplémentaire (4) du deuxième réseau correspond un comportement linéaire-élastique ou non-linéaire-élastique en tant que modèle de matériau.

3. Procédé selon la revendication 1 ou 2, **caractérisé en ce qu'**à tous les bâtonnets du premier réseau correspond le même premier modèle de matériau et à tous les bâtonnets supplémentaires du deuxième réseau correspond le même deuxième modèle de matériau, dans lequel les premier et deuxième modèles de matériau se distinguent l'un de l'autre.

4. Procédé selon l'une des revendications 1 à 3, **caractérisé en ce que** les bâtonnets (2) et les bâtonnets supplémentaires (4) sont placés de façon aléatoire dans les points nodaux (3) selon une répartition normale.

5. Procédé selon l'une des revendications 1 à 4, **caractérisé en ce que** l'élément tridimensionnel (1) dans le modèle est remplacé par un modèle de remplacement bidimensionnel avant la formation du premier réseau.

6. Procédé selon l'une des revendications 1 à 5, **caractérisé en ce que** les rigidités de l'élément ainsi que l'épaisseur de couche de l'élément (1) sont employés en tant que valeurs de départ pour le modèle de l'élément (1).

7. Procédé selon l'une des revendications 1 à 6, **caractérisé en ce qu'**un signal horaire-trajet ou un signal horaire-force est employé en tant que valeur de départ pour la charge.

8. Procédé selon l'une des revendications 1 à 7, **caractérisé en ce que** l'élément (1) est un élément d'un véhicule ferroviaire.

9. Produit de programme informatique qui comprend un programme et peut être chargé directement dans la mémoire d'un ordinateur, avec des ressources de programme, pour exécuter toutes les étapes du procédé selon l'une des revendications 1 à 8 lorsque le programme est exécuté par l'ordinateur.
